# EUROPEAN PATENT SPECIFICATION

(11) **EP 3 848 493 B1**
(45) Date of publication and mention of the grant of the patent: **16.07.2025**
(21) Application number: 18807547.7
(22) Date of filing: 28.09.2018
(51) Int. Cl.: D05C 17/02, D06N 7/00, B60N 3/04

(54) **USE OF A PET BCF FOR PRODUCING A TUFTED AUTOMOTIVE CARPET**
VERWENDUNG EINES PET-BCF ZUR HERSTELLUNG EINES GETUFTETEN AUTOMOBILTEPPICHS
UTILISATION D'UN PET BCF POUR LA FABRICATION D'UN TAPIS AUTOMOBILE TUFTÉ

(30) Priority: 04.09.2018 KR 20180105076
(43) Date of publication of application: 14.07.2021
(73) Proprietor: HS Hyosung Advanced Materials Corporation, Seoul 04144 (KR)
(72) Inventor: KWON, Yong Chul, Gunpo-si Gyeonggi-do 15872 (KR); OH, Seung Taek, Uiwang-si Gyeonggi-do 16021 (KR)
(74) Representative: v. Bezold & Partner Patentanwälte - PartG mbB
(86) International application number: PCT/KR2018/011592
(87) International publication number: WO 2020/050450

(56) References cited:
- EP-A1- 1 433 806
- EP-A1- 3 835 472
- WO-A1-2010/133531
- WO-A2-2018/135714
- KR-A- 20090 049 345
- KR-A- 20180 086 321
- KR-B1- 100 663 254
- KR-B1- 100 687 032
- KR-B1- 100 939 022

## Description

### Technical Field

The present invention relates to a polyethylene terephthalate bulked continuous filament suitable for use as an automotive carpet.

### Background Art

Generally, nylon 6, nylon 66, polypropylene, polyethylene terephthalate, and the like are used as a synthetic material of a bulked continuous filament (BCF) as a material for a tufted carpet. Among them, nylon is the most suitable material for carpet, but it has a disadvantage of high price, so low-priced polypropylene is used as a substitute.

However, since polypropylene has poor heat resistance and is not suitable for use in automobile carpets that are molded at high temperatures, nylon materials are widely used, but nonwoven type needle punches are used in many cases because the nylon materials are expensive. On the other hand, the needle punch nonwoven fabric has a disadvantage in that the quality of the appearance low and the abrasion resistance is poorer than that of the tufted carpet.

In recent years, in order to solve the above problems, attempts have been made to make BCF by using a polyethylene terephthalate material having excellent characteristics in comparison with other materials in terms of economy and having a high heat resistance to thereby be used for a carpet for automobiles, but since polyethylene terephthalate has higher specific gravity than that of nylon materials, the weight of the yarn should be increased in order to make the same outer appearance, which is disadvantageous in terms of cost. In addition, since the bulk stability of the yarn is lower than that of nylon, there is a problem that the yarn is pressed after molding, and the feeling of volume is lowered.

Further, when the carpet is produced using polyethylene terephthalate BCF, the BCF yarn itself must have tensile strength and strength properties against external force in order to improve the wear resistance of the carpet. In order to increase the tensile strength of the filament, it is necessary to stretch the fibers at a high rate in the stretching step in the BCF manufacturing process. However, when the tensile ratio is high, filament yarn breakage occurs and work becomes difficult. In severe cases, tensile strength is lowered. Examples automotive carpets using PET BCF are disclosed in WO 2018/135714 A2.

### Disclosure

### Technical Problem

It is an object of the present invention to provide a polyethylene terephthalate bulked continuous filament suitable for use as an automobile carpet by including a monofilament having improved strength and elongation.

Another object of the present invention is to provide a carpet which is improved in the sense of volume of the outer appearance and in the quality of abrasion resistance by including the polyethylene terephthalate bulked continuous filament.

### Technical Solution

The present invention is defined by the appended claims directed to the use of a polyethylene terephthalate bulked processing continuous filament prepared by melt spinning a polyethylene terephthalate polymer for producing a tufted carpet for automobiles. The tufted carpet includes: a pile layer including a polyethylene terephthalate bulked processing continuous filament (BCF) prepared by melt spinning a polyethylene terephthalate (PET) polymer; and at least one backing layer, wherein a monofilament of the BCF may have elongation of 5% or more at an initial stress of 1.0 gram/1.1dtex (which in the following will be referred to by g/d), elongation of 25 to 35% at a medium-term stress of 3.0 g/d, tensile strength of 4.0 to 6.0g/d, and elongation of 40 to 60%.

Herein, a content of a low molecular substance of 3 to 7 oligomers, which has not formed a polymer in the polyethylene terephthalate polymer, is 1.0 wt% or less, and a content of the low molecular substance in the filament is 1.3 wt% or less.

Further, the polyethylene terephthalate polymer has a weight average molecular weight of 50,000 to 70,000.

Further, the continuous filament may be formed of multifilaments of 50 to 300 aggregates of monofilaments.

Further, a total fineness of the bulked processing continuous filament may be 700 to 1500 denier.

Further, a wear resistance level according to MS343-15 standard may be grade 3 or more.

### Advantageous Effects

The polyethylene terephthalate bulked continuous filament used in an embodiment of the present invention includes monofilaments having improved strength and elongation, so that the carpet including the same can also have improved volume feeling of the appearance and quality of the abrasion resistance.

### Brief Description of the Drawings

FIG. 1 is a schematic view of an apparatus for producing polyethylene terephthalate bulked continuous filaments according to an example of the present invention.
FIG. 2 is a view illustrating the stress-strain curves for a polyethylene terephthalate monofilament according to one embodiment of the present invention.
FIG. 3 is a schematic view of a tufted carpet according to an example of the present invention.

### Detailed Description of the Preferred Embodiments

The present invention is capable of various modifications and various forms, and specific examples are described in detail in the following description.

In this application, the terms "include" or "having", etc., are used to specify that there is a feature, figure, step, operation, element, part or combination thereof which is stated in the specification, and that it should not be construed to preclude the presence or addition of one or more other features, integers, steps, operations, components, parts, or combinations thereof. Also, when a part such as a layer, film, region, plate, or the like is referred to as being "on" another part, this includes not only the case where it is "directly over" another part, but also a case where there is another part therebetween. On the contrary, when a part such as a layer, film, region, plate or the like is referred to as being "under" another part, it includes not only the case where it is "directly under" another part, but also the case where there is another part in the middle.

Hereinafter, examples of the present invention will be described in detail.

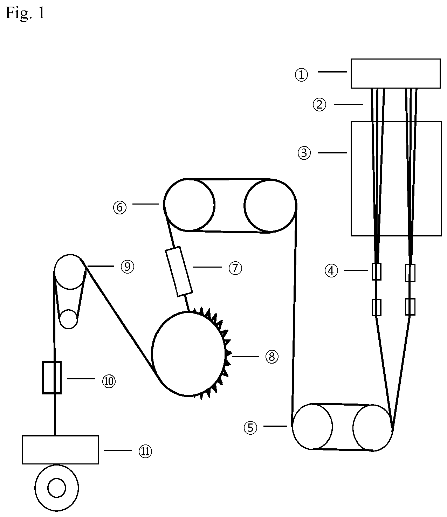

Hereinafter, a method for producing a polyethylene terephthalate bulked continuous filament according to an example of the present invention will be described with reference to the drawings. FIG. 1 is a schematic view of an apparatus for producing polyethylene terephthalate bulked continuous filaments according to an example of the present invention.

A method of producing polyethylene terephthalate bulked continuous filaments according to an example may include melt spinning a polyethylene terephthalate chip.

The polyethylene terephthalate chip is preferably prepared by liquid phase polymerization or solid phase polymerization. At this time, it is preferable to use a batch or continuous polymerization method for the solid phase polymerization, but the present invention is not limited to this example. More specifically, the solid phase polymerization is carried out under vacuum conditions at 110 to 170°C for 4 to 6 hours to remove moisture, and the temperature is raised from 235 to 255°C for 4 to 6 hours, and the solid phase polymerization time is preferably 20 to 30 hours.

As described above, the liquid phase polymerization or solid phase polymerized polyethylene terephthalate chips are melt-spun at 245-335°C and passed through a spinneret 1.

The polyethylene terephthalate resin that is the basis of the present invention preferably contains at least 90 mol% of repeating units of ethylene terephthalate.

Alternatively, the polyethylene terephthalate may include a small amount of units derived from ethylene glycol and terephthalenedicarboxylic acid or derivatives thereof and one or more ester-forming components as copolymer units. Examples of other ester forming components copolymerizable with the polyethylene terephthalate unit include glycols such as 1,3-propanediol, 1,4-butanediol, 1,6-hexanediol and the like, and dicarboxylic acid such as terephthalic acid, isophthalic acid, hexahydroterephthalic acid, stilbene dicarboxylic acid, bibenzoic acid, adipic acid, sebacic acid, and azelaic acid.

At this time, the molecular weight of the polymer is very important in order to have a high level of tensile strength in an appropriate stretching ratio in the production of yarn. In the present invention, the weight average molecular weight of the polyethylene terephthalate is preferably 50,000 or more, more preferably 50,000 to 70,000. When the weight average molecular weight is less than the above range, especially when the weight average molecular weight of the polyethylene terephthalate fiber is in the range of 35,000 to 45,000, the stretching ratio should be increased to a very high level in the molecular weight range, and thus stable process operability cannot be secured.

On the other hand, the content of a low molecular material such as an oligomer having a number of oligomers (n) of 3 to 7 that does not form a polymer in a polyethylene terephthalate polymer is very important. At this time, the low molecular weight material may have a weight average molecular weight of 550 to 1,500. The content of such a low-molecular substance is preferably 1.0 wt% or less, more preferably 0.8 wt% or less, in the polyethylene terephthalate polymer. If the content is more than 1.0 wt%, foreign matters may be generated due to melt fracture occurring near the spinning nozzle, thereby shortening the wiping cycle and causing filament yarn breakage. As a result, tensile strength, elongation and the like may be deteriorated.

Further, in the process of melt spinning the polymer, thermally oxidative decomposition occurs due to heat and friction in a high-temperature extruder to thereby generate a low molecular weight material. At this time, the low molecular weight material in the filament after winding is preferably 1.3 wt% or less, and more preferably 1.0 wt% or less. On the other hand, in the case that the low-molecular substance in the filament is more than 1.3% wt%, when the carpet fabric is finally molded by heat and pressure, it is converted into carbonization or foreign matter, and it is difficult for BCF file to be formed properly, and as a result, it becomes difficult to express the volume feeling of the pile layer.

Further, the moisture content of the polyethylene terephthalate chip is preferably 40 ppm or less. Polyethylene terephthalate is very vulnerable to moisture, so that by controlling the water content of the chip to the above range, it is possible to prevent molecular weight drop due to hydrolysis. On the other hand, when the water content exceeds 40 ppm, a viscosity drop due to hydrolysis occurs, and the tensile strength of the monofilament is lowered.

The fineness of the polyethylene terephthalate yarn thus produced is preferably 777.7 to 1666.5 dtex (700 to 1500 denier) and more preferably 944.4 to 1500 dtex ( 850 to 1350 denier). The diameter of the polyethylene terephthalate yarn is preferably 6 to 20 dpf, more preferably 10 to 15 dpf.

When the fineness of the yarn is less than 777.7 dtex (700 denier) and the diameter is less than 6 dpf, the uprightness of the fabric pile is lowered when the carpet is formed, resulting in poor abrasion resistance, molding restorability and appearance, and when the fineness exceeds 1666.5 dtex (1500 denier) or the diameter exceeds 20 dpf, the density of the carpet fabric is lowered, resulting in poor abrasion resistance and restoring force.

Thereafter, the step of cooling the spun polyethylene terephthalate yarn may be performed. At this time, the cooling step may be a step of cooling the yarn at the cooling zone 3 with air at a speed of 0.2 to 1.0 m/sec. The cooling temperature is preferably adjusted to 10 to 30°C, and if the cooling temperature is less than 10°C, it is disadvantageous from the economical point of view. If the cooling air speed is less than 0.2 m/sec, the cooling effect is insufficient. If the cooling air speed is more than 1.0 m/sec, the shaking of the yarn is excessive, which will cause a problem in the spinning workability, and thus it is preferable that the speed of the cooling air is 0.2 to 1.0 m/sec.

After the cooling, a spin finish step of performing oiling is carried out. In a finishing applicator 4, oil is firstly and secondarily lubricated by using a neat type emulsion or a watersoluble emulsion, thereby increasing rolling speed, lubricity and smoothness of the yarn.

Thereafter, the filament is fed to a stretching roller 6 at a speed of 300 to 1,200 m/min, preferably 500 to 800 m/min, on the feed roller 5. At this time, the stretching roller 6 is stretched at a speed of 2.0 to 5.0 times the feed roller 5 speed, preferably 2.5 to 4.5 times. If the stretching speed is less than 2.0 times, the stretching cannot be performed sufficiently. If the stretching speed is more than 5.0 times, the polyethylene terephthalate may not be stretched due to the nature of the material.

The filament that has passed through the stretching roller 6 passes through a texturing unit 7 having a texturing nozzle for imparting a bulking property. At this time, a heating fluid of 150 to 270°C is sprayed in the texturing unit 7 with a pressure of 3 to 10 kg/cm2 to thereby cause the filament to crimp irregularly in three dimensions.

In this case, the temperature of the heating fluid is preferably 150 to 250°C, and when the temperature is lower than 150°C, the texturing effect is lowered. If the temperature exceeds 250°C, the filament is damaged. In addition, the pressure of the heating fluid is preferably 3 to 10 kg/cm2, and if less than 3 kg/cm2, the texturing effect is lowered, and if it exceeds 10 kg/cm2, the filament is damaged.

The filament that has passed through the texturing unit 7 is cooled through the cooling drum 8 disposed at the lower end of the texturing nozzle. The cooled raw yarn is passed through the relax roller 9 at a speed of 0.65 to 0.95 times the drawing roller speed to give an over feed rate of 5 to 35%. At this time, if the speed of the relax roller is less than 0.65 times the speed of the stretching roller, the paper is not wound. If the speed exceeds 0.95 times, the bulkiness is reduced, the shrinkage of the yarn is significantly increased, and high tension is caused, thereby interfering with the job. The yarn passed through the relax roller 9 passes through a collator 10. In this part, a slight twist and a knot are given at a pressure of 2.0 to 8.0 kg/m2 in order to improve the rolling speed of the yarn, and it is given in the range of 0 to 40 times/m, preferably 10 to 25 times/m. In case of exceeding 40 times of being interlaced, even after dyeing and post-processing, the interlaced state is maintained and the appearance of the carpet is damaged. The yarn passed through the collator 10 is wound in the final winder 11.

The speed of the winder is preferably adjusted so that the tension of the yarn usually ranges from 50 to 350g. At this time, if the tension is less than 50g in the winder, the winding is impossible, and if it exceeds 350g, the bulkiness is decreased and the contraction of the yarn is largely caused and the high tension is generated.

The above method relates to a BCF produced only from a polyethylene terephthalate resin, and the stepwise process is the same as that described above in the case of producing a dope-dyed yarn according to the carpet use. However, it is also possible to manufacture a dope-dyed yarn by feeding a certain amount of coloring agents into the base chip input amount in the supply of the raw material and spinning it.

On the other hand, when the carpet is produced using the polyethylene terephthalate BCF produced as described above, the BCF yarn itself needs to have physical properties against external force in order to improve the wear resistance of the carpet. In order to resist external forces, the tensile strength of the yarn should be high. Generally, the yarn with high tensile strength is also highly wear-resistant. However, the physical properties of the tensile strength that contributes to the abrasion resistance of the tufted carpet are not the tensile strength of the BCF yarn bundle but the tensile strength of each filament, i.e., the tensile strength of the monofilament. In general, the abrasion resistance analysis is carried out in a taber abrasion tester in accordance with ASTM D3384, in which the tensile strength of the monofilament is more important than the physical properties of the entire bundle, i.e., the multifilament, because each filament contacts the abrasive wheel.

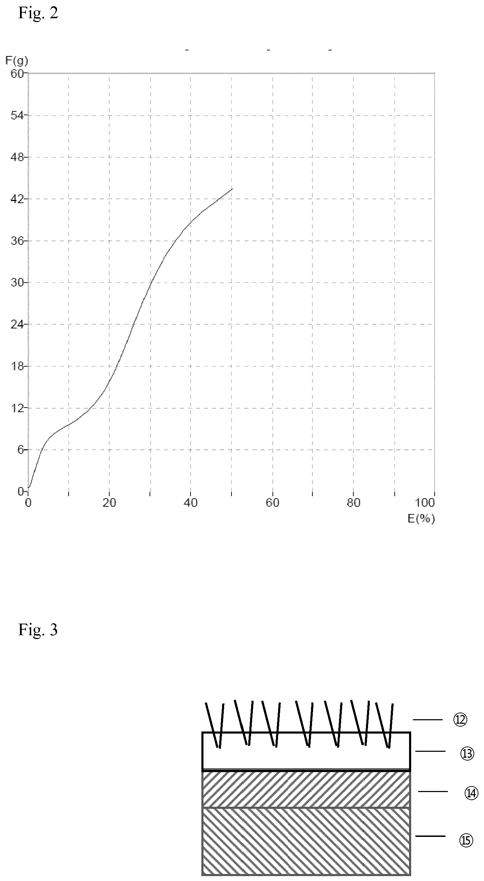

The polyethylene terephthalate bulked continuous monofilament prepared according to the present invention has a tensile strength of 4.0 to 6.0 gram/1.1dtex (which in the following will be referred to by g/d) and an elongation percentage(strain) of 40 to 60%. Further, as shown in FIG. 2, the monofilament is elongated by 5% or more at an initial stress of 1.0 g/d, elongated by 25 to 35% at a medium-term stress of 3.0 g/d, and has a stress-strain curve that elongates by 5% or more until the yarn is cut from the stress of 4.0 g/d. When the stress is in the above range, the abrasion resistance of the nylon level of the same weight can be secured.

The polyethylene terephthalate bulked continuous multifilament may be formed of aggregate of 50 to 300 monofilaments, more preferably 60 to 200 monofilaments.

As described above, the polyethylene terephthalate multifilament prepared according to the present invention is manufactured as a carpet for automobiles through a post-process. Carpets made from the BCF yarns of the present invention can be prepared in any manner known to those skilled in the art. FIG. 3 shows a specific example of a tufted carpet for automobiles according to the present invention. The carpet has a face yarn 12 supported by a first base foil 13. At this time, the first base foil 13 is referred to as a backing layer, and the layer formed of the face yarn 12 is referred to as a pile layer. The face yarn 12, which is the outermost layer where the consumer feels the visual sensation by the eye, is formed of BCF yarn. The first base foil 13 is made of polyester or polyolefin and preferably has a spunbond or fabric shape of 90 to 150 gsm. Also, the pile layer including the face yarn 12 preferably has a weight of 180 to 700 gsm. Adjacent to the first base foil 13 is a coating layer 14 that fixes the face yarn 12, which is a suitable material conventionally used in the art, such as latex or acrylic. Finally, the carpet is subjected to a secondary coating 15 to provide sound insulation or sound absorption performance in order to ensure quietness in the automobile. It is also possible to apply 300 to 5000 gsm of PE or EVA or to attach a sound-absorbing nonwoven fabric. When the carpet is produced using the polyethylene terephthalate BCF according to the present invention, the same appearance as that of nylon is exhibited even with the yarn weight of the same face yarn as that of the nylon tufted carpet, and the abrasion resistance according to the MS343-15 standard is not less than grade 3, and thus the abrasion resistance can be improved.

Hereinafter, the present invention will be described in detail with reference to examples. However, the following examples are illustrative of the present invention, and the present invention is not limited by the following examples.

### [Example 1]

A slurry prepared by mixing 50 parts by weight of ethylene glycol with 100 parts by weight of terephthalic acid was added into an esterification reactor and pressurized at 250°C for 4 hours under a pressure of 0.5 torr to allow water to flow out of the reactor and allow the esterification reaction to be performed, to thereby prepare (2-hydroxyethyl) terephthalate. At this time, 300 ppm of a phosphorus heat stabilizer was added at the end of the esterification reaction. After the esterification reaction, 300 ppm of the antimony catalyst was added as an polymerization catalyst at the beginning of the polycondensation reaction, the temperature was raised from 250°C to 285°C at 60°C/hr, and the pressure was reduced to 0.5 torr. Solid phase polymerization is carried out to increase the viscosity of the liquid polymer. During the process of solid phase polymerization in general, the batch solid phase polymerizer is used to dry for 4 hours at 140°C under vacuum condition. The temperature is raised from 235°C to 245°C for 4 hours to 6 hours until reaching the final target viscosity.

The polyethylene terephthalate polymer produced through the spinneret having 128 holes and a Y-shaped cross-section is melt-spun at 290°C. The polymer exiting the spinneret is cooled by cooling air at 20°C at the bottom of the nozzle at 0.5 m/s, and then passes through the emulsion feeder. The yarn to which the emulsion has been applied passes through a feed roller maintained at a temperature of 90°C at a speed of 598 m/min and then stretched at a rate of 2,840 m/min at 190°C on the stretching roller. The yarn passed through the stretching roller passes the texturing nozzle and is given a crimp. At this time, the hot air temperature is 200°C, the pressure is 7 kg/cm2, and the back pressure is 5 kg/cm2. Thereafter, the yarn was cooled at the outlet of the texturing nozzle, and relaxed by about 21% after passing the relax roller at 2250 m/min. After being interlaced 20 times/m at a pressure of 4.0 kg/m2, it is wound in a winding machine.

The polyethylene terephthalate bulky continuous filament thus prepared was used to prepare a carpet.

### [Examples 2 to 3 and Comparative Example 1]

Polyethylene terephthalate BCF yarn and carpet were prepared through the same procedure as in Example 1, except that the molecular weight of the polymer and the content of the low molecular weight substance were adjusted as shown in Table 1 below.

### [Experimental Example]

### 1) Strength and elongation of monofilament

Ten monofilaments were extracted from a yarn (multifilament) which was left alone for 24 hours at a temperature of 25°C and a relative humidity of 65RH%. By using a monofilament tensile tester Vibrojet 2000 manufactured by Lenzing Co., a load (approximately, mono-denier x 60 (mg)) stipulated per denier was applied in the Vibroiet, and it was then measured at a sample length of 20 mm and a tensile speed of 20 mm/min. The monofilament properties were measured with the average value of the remaining eight values, excluding the maximum value and the minimum value among the ten measured values. The initial modulus represents the slope of the graph before the yield point.

### 2) Wear resistance of carpet

Abrasion resistance of carpet was evaluated as follows, and the results are shown in Table 1 below.
Related test method Specification: ASTM D3884
Test method: Hyundai Motor MS300-35
Test equipment: Taber abrasion tester
Sample size: 130mm diameter Circular sample
Exam conditions
   - Wear wheel: H-18
   - Rotation speed: 70 times/minute
   - Load: 1000g
   - Number of revolutions 1000
   - Evaluation method: Appearance evaluation 1st to 5th grade (Passed grade 3 or higher (3, 4, 5 grade) of MS343-15 of Hyundai Motor Company)
   - Evaluation criteria: Grade 5: No abrasion; Grade 4: Abrasion is slightly visible or almost invisible; Grade 3: Abrasion is visible; Grade 2: Abrasion is slightly severe; Grade 1: Abrasion is fairly severe

### 3) Content of low molecular substances

High-performance liquid chromatography (HPLC) was used to analyze the content of low molecular weight materials in PET polymer and filament. At this time, as a pretreatment, a sample of about 0.1g was dissolved in 5 ml of HFIP(Hexafluoro-2-propanol)/CH2Cl2 = 1/3(v/v) and reprecipitated with 10 ml of acetonitrile and then injected into UPLC. The conditions for detailed HPLC analysis are as follows.
- Equipment used: Waters UPLC
- Column: X-bridge C18 5µm (4.6*250mm)
- Eluent: A/B=90/10→A/B=0/100→A/B=90/10, A: 0.3%H₃PO₄, B: CH₃CN
- Flow rate: 1.0ml/min (5.0µL Inj, Runtime: 40min)
- Detection: UV Detector at 242nm

**[Table 1]**

| | Polymer | | Monofilament | | | | | Carpet | |
|---|---|---|---|---|---|---|---|---|---|
| | Weight average molecular weight | Low molecular weight content | Strengt h | Elongat ion | Elongation at 1.0g/d (%) | Elongation at 3.0g/d (%) | Low molecular weight content | Weight | Abrasion |
| | | (wt%) | (g/d) | (%) | | | (wt%) | (g/m2) | (Grade) |
| Example 1 | 55000 | 0.56 | 4.4 | 48 | 9.2 | 28.9 | 0.91 | 305 | 3 |
| Example 2 | 60000 | 0.43 | 4.6 | 50 | 10.9 | 28.8 | 0.85 | 305 | 3 |
| Example 3 | 65000 | 0.38 | 5.1 | 52 | 10.5 | 30 | 0.76 | 305 | 3 |
| Comparative example 1 | 40000 | 1.1 | 3.4 | 41 | 4.5 | 33.2 | 1.4 | 305 | 2 |

As shown in Table 1, in the case of the embodiment, as the content of the low-molecular substances in the polymer and the filament is 1.0 wt% or less and 1.3 wt% or less, the produced monofilaments constituting the polyethylene terephthalate BCF has a strength of 4.0 to 6.0 g/d and elongation of 40 to 60%, and the tensile strength and elongation are improved by having the stress-strain curve as described above. As the tensile strength and elongation of the monofilament are improved, the physical properties against external force are improved and the wear resistance of the carpet is also improved.

While the present invention has been particularly shown and described with reference to exemplary embodiments thereof, it will be understood by those skilled in the art that various changes and modifications may be made without departing from the spirit and scope of the invention as defined in the appended claims. It will be understood by those skilled in the art that various changes in form and details may be made therein without departing from the spirit and scope of the invention.

Accordingly, the technical scope of the present invention should not be limited to the contents described in the detailed description of the specification, but should be defined by the claims.

**Description of Symbols**

| | | | |
|---|---|---|---|
| 1: | spinneret | 2: | filament |
| 3: | cooling zone | 4: | finishing applicator |
| 5: | feed roller | 6: | stretching roller |
| 7: | texturing unit | 8: | Cooling Drum |
| 9: | relax roller | 10: | collator |
| 11 : | final winder | 12: | face yarn(BCF) |
| 13 : | first base foil | 14: | coating layer |
| 15 : | second coating layer | | |

## Claims

1. Use of a polyethylene terephthalate bulked processing continuous filament, BCF, prepared by melt spinning a polyethylene terephthalate polymer for producing a tufted carpet for automobiles, the tufted carpet comprising:
a pile layer including said polyethylene terephthalate BCF; and
at least one backing layer;
**characterized in that** the polyethylene terephthalate polymer has a weight average molecular weight of 50,000 to 70,000 and a content of a low molecular substance of 3 to 7 oligomers, which has not formed a polymer in the polyethylene terephthalate polymer that is 1.0 wt% or less, and a content of the low molecular substance in the BCF is 1.3 wt% or less;
and a monofilament of the BCF has elongation of 5% or more at an initial stress of 1.0 gram/1.1dtex (g/d), elongation of 25 to 35% at a medium-term stress of 3.0 gram/1.1dtex (g/d), tensile strength of 4.0 to 6.0 gram/1.1dtex (g/d), and elongation of 40 to 60%, wherein the elongation and tensile strength was determined as follows:
ten monofilaments were extracted from a multifilament which was left alone for 24 hours at a temperature of 25°C and a relative humidity of 65RH%, by using a monofilament tensile tester Vibrojet 2000 manufactured by Lenzing Co., a sample length of 20 mm was subjected to a load of approximately mono-denier times 60 mg, and it was then measured at a tensile speed of 20 mm/min, wherein the monofilament properties were measured with the average value of the remaining eight values, excluding the maximum value and the minimum value among the ten measured values, and wherein the initial modulus represents the slope of the graph before the yield point.

2. The use of claim 1, wherein the BCF is a multifilament of 50 to 300 aggregates of monofilaments.

3. The use of claim 1, wherein a total fineness of the BCF is 777.7 to 1666.5 dtex (700 to 1500 denier).

## Patentansprüche

1. Verwendung eines texturierten Polyethylenterephthalat-Endlosgarns, BCF, das durch Schmelzspinnen eines Polyethylenterephthalat-Polymers hergestellt wird, zur Herstellung eines getufteten Teppichs für Kraftfahrzeuge, wobei der getuftete Teppich umfasst:
eine Florschicht, die das Polyethylenterephthalat-BCF umfasst; und
mindestens eine Trägerschicht;
**dadurch gekennzeichnet, dass** das Polyethylenterephthalat-Polymer ein Gewichtsmittel des Molekulargewichts von 50000 bis 70000 und einen Gehalt einer niedermolekularen Substanz aus 3 bis 7 Oligomeren, die kein Polymer in dem Polyethylenterephthalat-Polymer gebildet hat, von 1,0 Gew.-% oder weniger aufweist, und ein Gehalt der niedermolekularen Substanz in dem BCF 1,3 Gew.-% oder weniger beträgt;
und ein Monofilament des BCF eine Dehnung von 5 % oder mehr bei einer anfänglichen Belastung von 1,0 Gramm/1,1 dtex (g/d), eine Dehnung von 25 bis 35 % bei einer mittelfristigen Belastung von 3,0 Gramm/1,1 dtex (g/d), eine Zugfestigkeit von 4,0 bis 6,0 Gramm/1,1 dtex (g/d) und eine Dehnung von 40 bis 60 % aufweist, wobei die Dehnung und die Zugfestigkeit wie folgt bestimmt wurden:
zehn Monofilamente wurden aus einem Multifilament entnommen, das für 24 Stunden bei einer Temperatur von 25 °C und einer relativen Feuchtigkeit (RH) von 65 % stehengelassen worden ist, unter Verwendung eines Monofilament-Zugprüfgeräts Vibrojet 2000, hergestellt von Lenzing Co., wurde eine Probenlänge von 20 mm einer Belastung von etwa Mono-Denier mal 60 mg ausgesetzt; und dann wurde sie bei einer Zuggeschwindigkeit von 20 mm/min gemessen, wobei die Monofilament-Eigenschaften mit dem Durchschnittswert der verbliebenen acht Werte, ausschließlich den maximalen Wert und den minimalen Wert von den zehn gemessenen Werten, gemessen wurden und wobei der anfängliche Modul die Steigung des Graphen vor der Streckgrenze darstellt.

2. Verwendung nach Anspruch 1, wobei das BCF ein Multifilament aus 50 bis 300 Aggregaten von Monofilamenten ist.

3. Verwendung nach Anspruch 1, wobei eine Gesamtfeinheit des BCF 777,7 bis 1666,5 dtex (700 bis 1500 denier) beträgt.

## Revendications

1. Utilisation d'un filament continu en vrac, BCF, à base de polyéthylène téréphtalate, préparé en centrifugeant par fusion un polymère de polyéthylène téréphtalate pour produire une moquette tuftée pour automobiles, la moquette tuftée comprenant :
une couche de velours comportant ledit BCF de polyéthylène téréphtalate ; et
au moins une couche de support ;
**caractérisée en ce que** le polymère de polyéthylène téréphtalate a un poids moléculaire moyen en poids de 50 000 à 70 000 et une teneur en une substance à faible poids moléculaire de 3 à 7 oligomères, qui n'a pas formé de polymère dans le polymère de polyéthylène téréphtalate, qui est de 1,0 % en poids ou moins, et une teneur en la substance à faible poids moléculaire dans le BCF est de 1,3 % en poids ou moins ;
et un mono-filament du BCF présente un allongement de 5 % ou plus à une contrainte initiale de 1,0 gramme/1,1 dtex (g/d), un allongement de 25 à 35 % à une contrainte à moyen terme de 3,0 grammes/1,1 dtex (g/d), une résistance à la traction de 4,0 à 6,0 grammes/1,1 dtex (g/d), et un allongement de 40 à 60 %, dans laquelle l'allongement et la résistance à la traction ont été déterminés de la manière suivante :
dix mono-filaments ont été extraits d'un multi-filament qui a été laissé seul pendant 24 heures à une température de 25 °C et une humidité relative de 65 % RH, en utilisant un testeur de traction de mono-filament Vibrojet 2000 fabriqué par Lenzing Co., une longueur d'échantillon de 20 mm a été soumise à une charge d'environ un mono-denier fois 60 mg, et elle a ensuite été mesurée à une vitesse de traction de 20 mm/min, dans laquelle les propriétés du mono-filament ont été mesurées avec la valeur moyenne des huit valeurs restantes, à l'exclusion de la valeur maximale et de la valeur minimale parmi les dix valeurs mesurées, et dans laquelle le module initial représente la pente du graphique avant la limite d'élasticité.

2. Utilisation selon la revendication 1, dans laquelle le BCF est un multi-filament de 50 à 300 agrégats de mono-filaments.

3. Utilisation selon la revendication 1, dans laquelle une finesse totale du BCF est de 777,7 à 1 666,5 dtex (700 à 1 500 deniers).
